# FASCICULE DE BREVET EUROPEEN

(11) **EP 4 455 015 B1**
(45) Date de publication et mention de la délivrance du brevet: **28.01.2026**
(21) Numéro de dépôt: 24171607.5
(22) Date de dépôt: 22.04.2024
(51) Int. Cl.: B64D 27/24, B64D 33/08, B64D 37/30, B64D 37/34, B64D 33/02, B64D 29/00, B64D 41/00, H01M 8/00, B64F 1/28

(54) **SYSTÈME DE PROPULSION POUR UN AÉRONEF, LEDIT SYSTÈME DE PROPULSION COMPORTANT UNE PILE À COMBUSTIBLE RÉVERSIBLE**
ANTRIEBSSYSTEM FÜR EIN FLUGZEUG, DAS ANTRIEBSSYSTEM UMFASST EINE REVERSIBLEN BRENNSTOFFZELLE
PROPULSION SYSTEM FOR AN AIRCRAFT, SAID PROPULSION SYSTEM COMPRISING A REVERSIBLE FUEL CELL

(30) Priorité: 25.04.2023 FR 2304133
(43) Date de publication de la demande: 30.10.2024
(73) Titulaire: Airbus, 31700 Blagnac (FR)
(72) Inventeur: KIERBEL, Daniel, 31700 BLAGNAC (FR)
(74) Mandataire: Cabinet Le Guen Maillet

(56) Documents cités:
- EP-B1- 2 293 979
- WO-A1-2021/115660
- CN-A- 102 934 274
- CN-A- 108 820 216
- CN-A- 113 232 869
- CN-A- 115 892 486
- DE-A1- 102020 002 414
- DE-A1- 102020 004 510
- US-A1- 2014 339 367
- US-A1- 2017 210 451
- US-A1- 2019 092 468
- US-A1- 2021 047 039

## Description

### DOMAINE TECHNIQUE

La présente invention concerne un système de propulsion à hélice pour un aéronef, ledit système de propulsion à hélice comportant une pile à combustible réversible, ainsi qu'un aéronef comportant au moins un tel système de propulsion.

### ÉTAT DE LA TECHNIQUE ANTÉRIEURE

Afin de se déplacer, un aéronef comporte un système de propulsion comportant un moteur et une hélice. Le moteur génère un mouvement rotatif qui est transmis à l'hélice.

Il est connu d'utiliser un moteur thermique afin de mettre en mouvement l'hélice. Un tel moteur thermique utilise généralement du kérosène. Il est également connu d'utiliser un moteur électrique afin de mettre en mouvement l'hélice. L'alimentation en courant électrique du moteur électrique s'effectue à partir d'un générateur électrique qui est disposé à distance du moteur électrique, ce qui nécessite la mise en place de conducteurs électriques relativement longs entre le générateur électrique et le moteur électrique.

La tension du courant qui circule dans ces conducteurs électriques est relativement élevée ce qui génère de fortes températures dans les conducteurs électriques qui doivent alors être de gros diamètre ou qui doivent être refroidis.

Il est également connu d'utiliser des piles à combustible pour générer de l'électricité et alimenter un moteur électrique. Avec cette technologie, il est nécessaire d'alimenter la pile à combustible avec du dihydrogène et pour ce faire, il est usuel de mettre en place des conduites de dihydrogène qui guident le dihydrogène vers la pile à combustible.

Une telle installation nécessite de remplir un réservoir avec du dihydrogène qui peut dans certains cas ne pas être disponible dans l'aéroport où stationne l'aéronef. Il est donc nécessaire de trouver un système de propulsion qui peut recharger le réservoir de dihydrogène lorsqu'il est au sol.

Les documents DE-A-10 2020 002414, WO-A-2021/115660 et EP-A-2 293 979 divulguent des systèmes de propulsion de l'état de la technique.

### EXPOSÉ DE L'INVENTION

Un objet de la présente invention est de proposer un système de propulsion à hélice ou fan caréné comportant une pile à combustible réversible qui permet de remplir le réservoir de dihydrogène à partir d'une électrolyse de l'eau dans la pile à combustible.

À cet effet, est proposé un système de propulsion pour un aéronef comportant un réservoir contenant du dihydrogène et stationnant sur un tarmac présentant un réservoir temporaire contenant de l'eau et un générateur électrique, le système de propulsion comportant :
- une nacelle,
- un moteur électrique fixé à l'intérieur de la nacelle et comportant une sortie sur laquelle sont montés un arbre, une première borne électrique et une deuxième borne électrique,
- une hélice entraînée en rotation par ledit arbre,
- une pile à combustible réversible et présentant au moins une anode électriquement connectée à la première borne électrique et au moins une cathode électriquement connectée à la deuxième borne électrique, et où les anodes et les cathodes sont destinées à être électriquement connectées au générateur électrique,
- une canalisation d'apport destinée à relier de manière fluidique le réservoir à la pile à combustible,
- une canalisation d'alimentation destinée à relier de manière fluidique la pile à combustible au réservoir temporaire, et
- une pompe agencée sur la canalisation d'apport entre le réservoir et la pile à combustible, et la pompe est réversible pour entraîner le dihydrogène alternativement du réservoir vers la pile à combustible ou de la pile à combustible vers le réservoir.

Un tel système de propulsion permet, grâce à la pile à combustible réversible et la pompe réversible de déplacer le dihydrogène dans les deux directions et de remplir le réservoir de dihydrogène pendant les escales.

Avantageusement, le système de propulsion comporte un échangeur de chaleur agencé de manière à assurer un échange de calories entre le moteur électrique et le dihydrogène dans la canalisation d'apport.

Avantageusement, la nacelle présente un canal d'air annulaire autour d'une direction longitudinale et la pile à combustible réversible comporte :
- un noyau autour de la direction longitudinale,
- des canaux ouverts autour du noyau, où chaque canal ouvert présente une entrée ouverte dans le canal d'air et une sortie ouverte dans le canal d'air et en aval de l'entrée ouverte par rapport au sens de l'écoulement de l'air dans le canal d'air,
- pour chaque canal ouvert, une chambre à combustible comportant une première entrée et une deuxième entrée, où la canalisation d'apport est fluidiquement connectée à chaque première entrée et où la canalisation d'alimentation est fluidiquement connectée à chaque deuxième entrée,
- pour chaque paire constituée d'un canal ouvert et d'une chambre à combustible, un électrolyte entre le canal ouvert et la chambre à combustible,
- entre chaque canal ouvert et l'électrolyte voisin, une cathode, et
- entre chaque chambre à combustible et l'électrolyte voisin, une anode.

Avantageusement, chaque canal ouvert présente une surface de l'entrée qui est inférieure à la surface d'une zone intermédiaire entre l'entrée et la sortie, et où la surface de la sortie est inférieure à la surface de la zone intermédiaire.

Selon un mode de réalisation particulier, les canaux ouverts sont des canaux coaxiaux les uns aux autres autour de la direction longitudinale, entre deux canaux ouverts consécutifs, la pile à combustible comporte une chambre à combustible annulaire, et entre la chambre à combustible et chaque canal ouvert, la pile à combustible comporte un électrolyte.

Selon un autre mode de réalisation particulier, les canaux ouverts sont disposés les uns à côté des autres et répartis angulairement autour de la direction longitudinale, et autour de chaque canal ouvert, la pile à combustible comporte un électrolyte annulaire autour de l'axe du canal ouvert et autour de l'électrolyte, une chambre à combustible annulaire autour de l'axe du canal ouvert.

Avantageusement, le système de propulsion comporte une couche thermiquement isolante qui est disposée entre la pile à combustible et le moteur électrique.

L'invention propose également un aéronef stationnant sur un tarmac présentant un réservoir temporaire contenant de l'eau et un générateur électrique et comportant un réservoir contenant du dihydrogène et un système de propulsion selon l'une des variantes précédentes, où les anodes et les cathodes sont électriquement connectées au générateur électrique, où la pile à combustible est fluidiquement connectée au réservoir par la canalisation d'apport, et au réservoir temporaire par la canalisation d'alimentation.

Avantageusement, l'aéronef comporte un fuselage et le réservoir est situé à l'arrière du fuselage.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de face d'un aéronef comportant un système de propulsion selon l'invention,
Fig. 2 est une vue de côté et en coupe d'un système de propulsion selon un premier mode de réalisation de l'invention,
Fig. 3 est une vue partielle de face d'une pile à combustible selon un premier arrangement,
Fig. 4 est une vue partielle de face d'une pile à combustible selon un deuxième arrangement,
Fig. 5 est une vue en coupe de la pile à combustible selon la ligne V-V de la Fig. 3, et
Fig. 6 est une vue en coupe de la pile à combustible selon la ligne VI-VI de la Fig. 4.

### EXPOSÉ DÉTAILLÉ DE MODES DE RÉALISATION

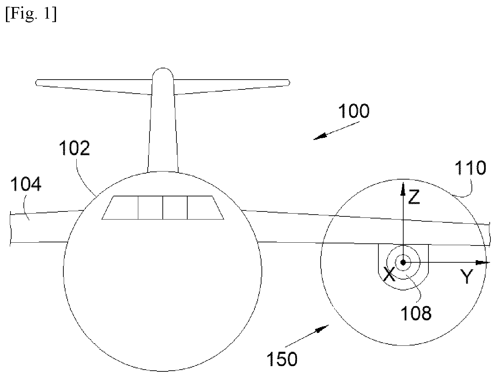

Dans la description qui suit, les termes relatifs à une position sont pris en référence à un aéronef en position d'avancement, c'est-à-dire comme il est représenté sur la Fig. 1 où la direction de l'axe X montre la direction d'avancement de l'aéronef.

La Fig. 1 montre un aéronef 100 qui présente un fuselage 102 de part et d'autre duquel est fixée une aile 104. Sous chaque aile 104 est fixé au moins un système de propulsion à hélice 150. Dans le mode de réalisation de l'invention présenté à la Fig. 1, il y a un système de propulsion 150 par aile 104.

Dans la description qui suit, et par convention, on appelle X la direction longitudinale du système de propulsion 150 orientée positivement dans le sens d'avancement de l'aéronef 100, on appelle Y la direction transversale du système de propulsion 150 qui est horizontale lorsque l'aéronef est au sol, et Z la direction verticale ou hauteur verticale lorsque l'aéronef est au sol, ces trois directions X, Y et Z étant orthogonales entre elles.

Le système de propulsion 150 comporte une hélice 110 et un moteur électrique 108 qui est fixé à l'aile 104 et qui présente une sortie sur laquelle est monté un arbre qui entraîne l'hélice 110 en rotation lorsque le moteur électrique 108 fonctionne. Les axes de rotation de l'arbre et de l'hélice 110 sont parallèles à la direction longitudinale X et dans les modes de réalisation présentés sur les différentes Figs., les axes de rotation sont confondus avec la direction longitudinale X.

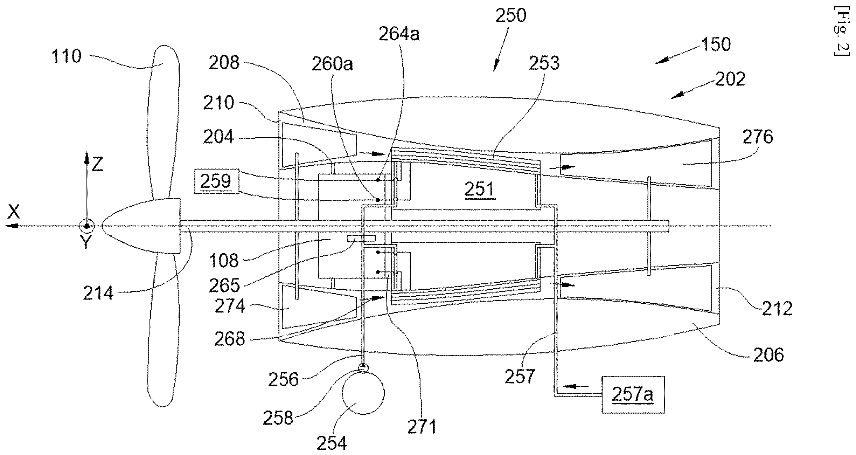

La Fig. 2 montre le système de propulsion 150 selon un premier mode de réalisation de l'invention. Le système de propulsion 150 comporte une nacelle 202 qui présente une structure 204 et des capots extérieurs 206 qui sont fixés sur la structure 204 et qui forment une surface extérieure aérodynamique. La nacelle 202 présente également un canal d'air 208 qui est annulaire autour de la direction longitudinale X et qui débouche à l'avant au niveau d'une bouche d'entrée 210 et à l'arrière par une bouche d'éjection 212.

Le moteur électrique 108 est fixé à la structure 204 à l'intérieur de la nacelle 202 et projette son arbre 214 vers l'avant et l'hélice 110 est entraînée en rotation par l'arbre 214 et disposée en avant par rapport à la bouche d'entrée 210. Le moteur électrique 108 comporte une première borne électrique et une deuxième borne électrique.

Le système de propulsion 150 comporte une pile à combustible 250 qui est une pile dans laquelle la génération d'une tension électrique se fait grâce à l'oxydation sur une électrode d'un réducteur, le dihydrogène sous forme liquide ou gazeux et stocké dans un réservoir 254 de l'aéronef 100, couplée à la réduction sur l'autre électrode d'un oxydant, le dioxygène de l'air. Le réservoir 254 est installé dans l'aéronef 100 par exemple dans les ailes 104 ou dans le fuselage 102 et plus particulièrement à l'arrière du fuselage 102.

La pile à combustible 250 est réversible c'est-à-dire que lorsqu'elle est alimentée en eau et en électricité, elle génère du dihydrogène qui peut être stocké dans un réservoir de dihydrogène et du dioxygène.

La pile à combustible 250 présente ainsi un premier mode de fonctionnement dans lequel elle génère de l'électricité et de l'eau à partir de dihydrogène et de dioxygène, et un deuxième mode de fonctionnement, dans lequel elle génère du dihydrogène et du dioxygène à partir d'eau et d'électricité.

Avec une telle pile à combustible 250, il est ainsi possible en l'alimentant avec de l'eau et de l'électricité, de remplir le réservoir 254 de dihydrogène de l'aéronef 100 pour le vol d'après. La pile à combustible 250 est fixée à la structure 204 à l'intérieur de la nacelle 202 en arrière du moteur électrique 108 et elle est constituée de plusieurs couches annulaires autour de la direction longitudinale X.

D'une manière générale, la pile à combustible 250 présente au moins une anode 260 électriquement connectée à la première borne électrique et au moins une cathode 264 électriquement connectée à la deuxième borne électrique.

Dans le mode de réalisation de l'invention présenté ici, les anodes 260 sont électriquement connectées à une première électrode 260a électriquement connectée à la première borne électrique du moteur électrique 108 et les cathodes 264 sont électriquement connectées à une deuxième électrode 264a électriquement connectée à la deuxième borne électrique du moteur électrique 108. Dans le premier mode de fonctionnement, le moteur électrique 108 est ainsi alimenté par les électrodes 260a et 264a.

Dans le deuxième mode de fonctionnement, la première électrode 260a et la deuxième électrode 264a, et par conséquent les anodes 260 et les cathodes 264, sont électriquement connectées à un générateur électrique 259 externe à l'aéronef 100 et disposé par exemple sur le tarmac de l'aéroport où est stationné l'aéronef 100. La connexion entre la première électrode 260a et la deuxième électrode 264a et le générateur électrique 259 s'effectue par exemple par un connecteur approprié disposé au niveau d'un capot extérieur 206. Le générateur électrique 259 peut être un générateur autonome ou le réseau électrique de l'aéroport.

Un interrupteur électrique est éventuellement intercalé entre les bornes électriques du moteur électrique 108 et les électrodes 260a et 264a pour ne pas alimenter ledit moteur électrique 108 dans le deuxième mode de fonctionnement.

Le système de propulsion 150 comporte également une canalisation d'apport 256 qui relie de manière fluidique le réservoir 254 à la pile à combustible 250, et une canalisation d'alimentation 257 qui relie de manière fluidique la pile à combustible 250 à un réservoir temporaire 257a contenant de l'eau et disposé par exemple sur le tarmac de l'aéroport où est stationné l'aéronef 100.

La connexion entre la canalisation d'alimentation 257 et le réservoir temporaire 257a s'effectue par exemple par un connecteur approprié disposé au niveau d'un capot extérieur 206.

Dans le premier mode de fonctionnement, la canalisation d'apport 256 transporte du dihydrogène à basse température et elle traverse ici un échangeur de chaleur 265 qui assure un échange de calories entre le moteur électrique 108 et le dihydrogène dans la canalisation d'apport 256. Cet arrangement permet de réduire la température du moteur électrique 108 pour améliorer son efficacité et d'augmenter la température du dihydrogène avant son arrivée dans une chambre à combustible 252 décrite ci-dessous dans un mode de réalisation particulier de l'invention.

Dans le deuxième mode de fonctionnement, l'échangeur de chaleur 265 peut être utilisé pour réduire la température du dihydrogène avant son envoi dans le réservoir 254.

L'échangeur de chaleur 265 est ainsi agencé de manière à assurer un échange de calories entre le moteur électrique 108 et le dihydrogène dans la canalisation d'apport 256.

Selon un mode de réalisation particulier, le système de propulsion 150 comporte une pompe 258 agencée sur la canalisation d'apport 256 entre le réservoir 254 et la pile à combustible 250, et la pompe 258 est une pompe réversible pour entraîner le dihydrogène alternativement du réservoir 254 vers la pile à combustible 250 dans le premier mode de fonctionnement ou de la pile à combustible 250 vers le réservoir 254 dans le deuxième mode de fonctionnement. Selon un mode de réalisation particulier, la pompe 258 est entraînée par le moteur électrique 108.

Selon un mode de réalisation particulier, la pompe 258 est également celle qui entraîne le dihydrogène dans l'échangeur de chaleur 265.

La mise en place d'une pompe 258 réversible sur la canalisation d'apport 256 permet ainsi d'aider à l'entrée du dihydrogène dans le réservoir 254.

Dans le mode de réalisation de l'invention présenté ici, la pile à combustible 250 comporte un noyau 251 qui est autour de la direction longitudinale X, ici autour de l'arbre 214, et en dehors du canal d'air 208, c'est-à-dire en deçà dudit canal d'air 208. Le noyau 251 assure la fixation de la pile à combustible 250 sur la structure 204.

La pile à combustible 250 comporte également des canaux ouverts 253, où chaque canal ouvert 253 présente une entrée ouverte dans le canal d'air 208 et une sortie ouverte dans le canal d'air 208 et en aval de l'entrée ouverte par rapport au sens de l'écoulement de l'air dans le canal d'air 208. Une telle répartition permet une meilleure répartition du dioxygène dans le canal ouvert 253.

Ainsi dans le premier mode de fonctionnement, l'air qui pénètre par la bouche d'entrée 210 pénètre par une entrée dans un canal ouvert 253 et ressort dudit canal ouvert 253 par une sortie pour rejoindre le canal d'air 208 et la bouche d'éjection 212. Chaque entrée fait face au flux d'air (flèche 268) pénétrant par la bouche d'entrée 210.

Chaque entrée ouverte permet l'introduction de l'air chargé en dioxygène dans chaque canal ouvert 253 et la sortie ouverte permet l'évacuation de l'air appauvri en dioxygène et l'eau fabriquée par la pile à combustible 250.

Ainsi, l'apport en dioxygène pour la pile à combustible 250 ne nécessite pas de conduite particulière. Chaque canal ouvert 253 constitue une chambre à dioxygène.

Ici, chaque entrée ouverte est orientée vers la bouche d'entrée 210 et chaque sortie ouverte est orientée vers la bouche d'éjection 212.

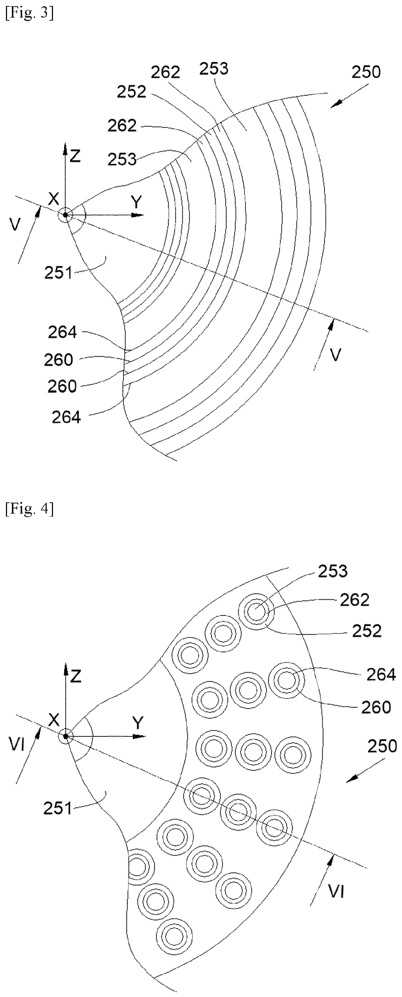

La Fig. 3 montre un premier arrangement dans lequel les canaux ouverts 253 sont des canaux coaxiaux les uns aux autres autour de la direction longitudinale X.

Entre deux canaux ouverts 253 consécutifs, la pile à combustible 250 comporte une chambre à combustible 252 annulaire autour de la direction longitudinale X, et entre la chambre à combustible 252 et chaque canal ouvert 253, la pile à combustible 250 comporte un électrolyte 262 annulaire autour de la direction longitudinale X.

La Fig. 4 montre un deuxième arrangement dans lequel les canaux ouverts 253 sont des canaux, ici cylindriques, disposés les uns à côté des autres et répartis angulairement autour de la direction longitudinale X.

Autour de chaque canal ouvert 253, la pile à combustible 250 comporte un électrolyte 262 annulaire autour de l'axe du canal ouvert 253 et autour de l'électrolyte 262, une chambre à combustible 252 annulaire autour de l'axe du canal ouvert 253. L'axe du canal ouvert 253 est ici parallèle à la direction longitudinale X.

Les parois séparant les différentes couches sont maintenues en position par exemple par des entretoises.

Entre chaque canal ouvert 253 et l'électrolyte 262 voisin, la pile à combustible 250 comporte une cathode 264, et entre chaque chambre à combustible 252 et l'électrolyte 262 voisin, la pile à combustible 250 comporte une anode 260.

Ainsi, d'une manière générale, pour chaque canal ouvert 253, la pile à combustible 250 comporte une chambre à combustible 252 alimentée en combustible, et pour chaque paire constituée d'un canal ouvert 253 et d'une chambre à combustible 252, un électrolyte 262 entre le canal ouvert 253 et la chambre à combustible 252.

Chaque chambre à combustible 252 forme un espace clos et elle comporte au moins une première entrée 252a par laquelle, dans le premier mode de fonctionnement, est introduit du dihydrogène et au moins une deuxième entrée 252b par laquelle, dans le deuxième mode de fonctionnement, est introduit de l'eau.

La première entrée 252a de chaque chambre à combustible 252 est fluidiquement connectée par la canalisation d'apport 256 au réservoir 254 de dihydrogène et présentant ici la pompe 258 destinée à entraîner le dihydrogène dans la canalisation d'apport 256.

La deuxième entrée 252b de chaque chambre à combustible 252 est fluidiquement connectée à la canalisation d'alimentation 257 qui est, dans le deuxième mode de fonctionnement, fluidiquement connectée au réservoir temporaire 257a.

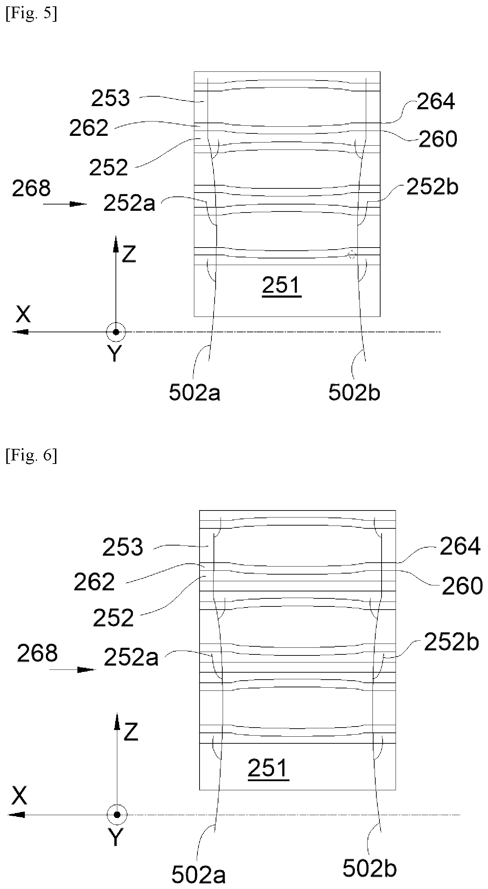

La Fig. 5 montre une coupe de la pile à combustible 250 de la Fig. 3.

La Fig. 6 montre une coupe de la pile à combustible 250 de la Fig. 4.

L'alimentation en dihydrogène de chaque chambre à combustible 252 s'effectue par des canalisations d'arrivée 502a qui courent à l'intérieur de la pile à combustible 250 et qui sont fluidiquement connectées à la canalisation d'apport 256.

L'alimentation en eau de chaque chambre à combustible 252 s'effectue par des canalisations d'entrée 502b qui courent à l'intérieur de la pile à combustible 250 et qui sont fluidiquement connectées à la canalisation d'alimentation 257.

Ainsi, dans le premier mode de fonctionnement, le dihydrogène de chaque chambre à combustible 252 et le dioxygène de chaque canal ouvert 253 réagissent à travers l'électrolyte 262 pour générer de l'électricité disponible au niveau de la première électrode 260a et de la deuxième électrode 264a et créer de l'eau qui est évacuée de la chambre à combustible 252 par la canalisation d'alimentation 257 vers l'extérieur de l'aéronef 100.

Ainsi, dans le deuxième mode de fonctionnement, l'eau de chaque chambre à combustible 252 et l'électricité disponible au niveau de la première électrode 260a et de la deuxième électrode 264a réagissent à travers l'électrolyte 262 pour créer du dihydrogène qui est évacué vers le réservoir de dihydrogène de l'aéronef 100 par la canalisation d'apport 256.

Le refroidissement de la pile à combustible 250 est assuré, au moins en partie, par l'air traversant les canaux ouverts 253. Bien sûr, un système de refroidissement additionnel peut être installé et il peut prendre toutes formes connues par l'homme du métier, comme par exemple un échangeur de chaleur.

La pile à combustible 250 ainsi agencée permet, en particulier dans le premier mode de fonctionnement, d'utiliser l'air extérieur circulant dans le canal d'air 208 pour générer du courant et refroidir, et son intégration dans la nacelle 202 limite les conducteurs électriques entre le moteur électrique 108 et la pile à combustible 250.

Afin d'obtenir un bon échange thermique dans le canal ouvert 253 et un bon échange de dioxygène pour générer de l'électricité, en particulier, dans le premier mode de fonctionnement, chaque canal ouvert 253 présente une section évolutive le long du trajet de l'air dans ledit canal ouvert 253.

Comme le montrent la Fig. 5 et la Fig. 6, le canal ouvert 253 présente une surface de l'entrée qui est inférieure à la surface de la zone intermédiaire entre l'entrée et la sortie, et la surface de la sortie est inférieure à la surface de la zone intermédiaire. Chaque surface correspond à une section par un plan perpendiculaire à la direction longitudinale X.

Avec une telle installation, un effet Venturi est obtenu, ce qui permet de ralentir la vitesse du flux d'air dans la zone intermédiaire puis de l'accélérer lorsqu'il sort de la zone intermédiaire. Selon un mode de réalisation particulier, la surface de l'entrée et la surface de la sortie sont dimensionnées pour obtenir une vitesse de Mach 0,6, et la surface de la zone intermédiaire est dimensionnée pour obtenir une vitesse de Mach 0,3.

Afin d'augmenter le débit d'air en entrée dans le canal d'air 208, le système de propulsion 150 comporte dans le canal d'air 208 au niveau de la bouche d'entrée 210, un compresseur 274 qui prend par exemple la forme d'ailettes entraînées en rotation autour de la direction longitudinale X par l'arbre 214.

Il est également possible de faire passer la canalisation d'apport 256 dans le canal d'air 208 au voisinage du compresseur 274 afin de refroidir l'air du canal d'air 208 et par conséquent le compresseur 274.

Afin d'augmenter le débit d'air en sortie du canal d'air 208 et d'augmenter l'évacuation de la chaleur, le système de propulsion 150 comporte dans le canal d'air 208 au niveau de la bouche d'éjection 212, une turbine 276 qui prend par exemple la forme d'ailettes entraînées en rotation autour de la direction longitudinale X par l'arbre 214. L'arbre 214 traverse alors la pile à combustible 250 de l'avant vers l'arrière.

La turbine 276 peut également permettre d'entraîner l'arbre 214 afin d'alléger le travail du moteur électrique 108 et donc d'abaisser les besoins électriques.

La pile à combustible 250 génère de fortes températures qui peuvent limiter les performances du moteur électrique 108. Afin de limiter cet impact, le système de propulsion 150 comporte une couche thermiquement isolante 271 qui est disposée entre la pile à combustible 250 et le moteur électrique 108. Un tel isolant thermique est par exemple du type aérogel de carbone. Dans le mode de réalisation de la Fig. 4, les chambres de combustible 252 et les électrolytes 262 sont disposés autour du canal ouvert 253, mais il est également possible de disposer la chambre à combustible 252 à côté du canal ouvert 253 en disposant l'électrolyte 262 entre eux.

Le système de propulsion 150 et tous ces éléments sont préférentiellement contrôlés par un contrôleur du type FADEC pour notamment réguler le débit de combustible, la vitesse de rotation de l'arbre moteur, etc.

## Revendications

1. Système de propulsion (150) pour un aéronef (100) comportant un réservoir (254) contenant du dihydrogène et stationnant sur un tarmac présentant un réservoir temporaire (257a) contenant de l'eau et un générateur électrique (259), le système de propulsion (150) comportant :
- une nacelle (202),
- un moteur électrique (108) fixé à l'intérieur de la nacelle (202) et comportant une sortie sur laquelle sont montés un arbre (214), une première borne électrique et une deuxième borne électrique,
- une hélice (110) entraînée en rotation par ledit arbre (214),
- une pile à combustible (250) réversible et présentant au moins une anode (260) électriquement connectée à la première borne électrique et au moins une cathode (264) électriquement connectée à la deuxième borne électrique, et où les anodes (260) et les cathodes (264) sont destinées à être électriquement connectées au générateur électrique (259),
- une canalisation d'apport (256) destinée à relier de manière fluidique le réservoir (254) à la pile à combustible (250),
- une canalisation d'alimentation (257) destinée à relier de manière fluidique la pile à combustible (250) au réservoir temporaire (257a), et **caractérisé en ce qu'**il comporte :
- une pompe (258) agencée sur la canalisation d'apport (256) entre le réservoir (254) et la pile à combustible (250), et où la pompe (258) est réversible pour entraîner le dihydrogène alternativement du réservoir (254) vers la pile à combustible (250) ou de la pile à combustible (250) vers le réservoir (254).

2. Système de propulsion (150) selon la revendication 1, **caractérisé en ce qu'**il comporte un échangeur de chaleur (265) agencé de manière à assurer un échange de calories entre le moteur électrique (108) et le dihydrogène dans la canalisation d'apport (256).

3. Système de propulsion (150) selon l'une des revendications 1 ou 2, **caractérisé en ce que** la nacelle (202) présente un canal d'air (208) annulaire autour d'une direction longitudinale (X) et **en ce que** la pile à combustible (250) réversible comporte :
- un noyau (251) autour de la direction longitudinale (X),
- des canaux ouverts (253) autour du noyau (251), où chaque canal ouvert (253) présente une entrée ouverte dans le canal d'air (208) et une sortie ouverte dans le canal d'air (208) et en aval de l'entrée ouverte par rapport au sens de l'écoulement de l'air dans le canal d'air (208),
- pour chaque canal ouvert (253), une chambre à combustible (252) comportant une première entrée (252a) et une deuxième entrée (252b), où la canalisation d'apport (256) est fluidiquement connectée à chaque première entrée (252a) et où la canalisation d'alimentation (257) est fluidiquement connectée à chaque deuxième entrée (252b),
- pour chaque paire constituée d'un canal ouvert (253) et d'une chambre à combustible (252), un électrolyte (262) entre le canal ouvert (253) et la chambre à combustible (252),
- entre chaque canal ouvert (253) et l'électrolyte (262) voisin, une cathode (264), et
- entre chaque chambre à combustible (252) et l'électrolyte (262) voisin, une anode (260).

4. Système de propulsion (150) selon la revendication 3, **caractérisé en ce que** chaque canal ouvert (253) présente une surface de l'entrée qui est inférieure à la surface d'une zone intermédiaire entre l'entrée et la sortie, et où la surface de la sortie est inférieure à la surface de la zone intermédiaire.

5. Système de propulsion (150) selon l'une des revendications 3 ou 4, **caractérisé en ce que** les canaux ouverts (253) sont des canaux cylindriques coaxiaux les uns aux autres autour de la direction longitudinale, **en ce qu'**entre deux canaux ouverts (253) consécutifs, la pile à combustible (150) comporte une chambre à combustible (252) annulaire, et **en ce qu'**entre la chambre à combustible (252) et chaque canal ouvert (253), la pile à combustible (250) comporte un électrolyte (262).

6. Système de propulsion (150) selon l'une des revendications 3 ou 4, **caractérisé en ce que** les canaux ouverts (253) sont disposés les uns à côté des autres et répartis angulairement autour de la direction longitudinale (X), et **en ce qu'**autour de chaque canal ouvert (253), la pile à combustible (250) comporte un électrolyte (262) annulaire autour de l'axe du canal ouvert (253) et autour de l'électrolyte (262), une chambre à combustible (252) annulaire autour de l'axe du canal ouvert (253).

7. Système de propulsion (150) selon l'une des revendications 1 à 6, **caractérisé en ce qu'**il comporte une couche thermiquement isolante (271) qui est disposée entre la pile à combustible (250) et le moteur électrique (108).

8. Aéronef (100) stationnant sur un tarmac présentant un réservoir temporaire (257a) contenant de l'eau et un générateur électrique (259) et comportant un réservoir (254) contenant du dihydrogène et un système de propulsion (150) selon l'une des revendications précédentes, où les anodes (260) et les cathodes (264) sont électriquement connectées au générateur électrique (259), où la pile à combustible (250) est fluidiquement connectée au réservoir (254) par la canalisation d'apport (256), et au réservoir temporaire (257a) par la canalisation d'alimentation (257).

9. Aéronef (100) selon la revendication 8, **caractérisé en ce qu'**il comporte un fuselage (102) et **en ce que** le réservoir (254) est situé à l'arrière du fuselage (102).

## Patentansprüche

1. Antriebssystem (150) für ein Flugzeug (100), das einen Tank (254) umfasst, der Diwasserstoff enthält, und das auf einem Vorfeld parkt, das einen temporären Tank (257a), der Wasser enthält, und einen elektrischen Generator (259) aufweist, wobei das Antriebssystem (150) Folgendes umfasst:
- eine Gondel (202),
- einen Elektromotor (108), der im Inneren der Gondel (202) befestigt ist und einen Ausgang umfasst, an dem eine Welle (214), ein erster elektrischer Anschluss und ein zweiter elektrischer Anschluss angebracht sind,
- einen Propeller (110), der durch die Welle (214) drehangetrieben wird,
- eine reversible Brennstoffzelle (250), die mindestens eine Anode (260), die mit dem ersten elektrischen Anschluss elektrisch verbunden ist, und mindestens eine Kathode (264), die mit dem zweiten elektrischen Anschluss elektrisch verbunden ist, aufweist, und wobei die Anoden (260) und die Kathoden (264) dazu bestimmt sind, mit dem elektrischen Generator (259) elektrisch verbunden zu werden,
- eine Zufuhrleitung (256), die dazu bestimmt ist, den Tank (254) mit der Brennstoffzelle (250) fluidisch zu verbinden,
- eine Versorgungsleitung (257), die dazu bestimmt ist, die Brennstoffzelle (250) mit dem temporären Tank (257a) fluidisch zu verbinden, und **dadurch gekennzeichnet, dass** es Folgendes umfasst:
- eine Pumpe (258), die in der Zufuhrleitung (256) zwischen dem Tank (254) und der Brennstoffzelle (250) eingerichtet ist, und wobei die Pumpe (258) reversibel ist, um den Diwasserstoff alternativ von dem Tank (254) zu der Brennstoffzelle (250) oder von der Brennstoffzelle (250) zu dem Tank (254) zu treiben.

2. Antriebssystem (150) nach Anspruch 1, **dadurch gekennzeichnet, dass** es einen Wärmetauscher (265) umfasst, der so eingerichtet ist, dass er einen Wärmeaustausch zwischen dem Elektromotor (108) und dem Diwasserstoff in der Zufuhrleitung (256) sicherstellt.

3. Antriebssystem (150) nach einem der Ansprüche 1 oder 2, **dadurch gekennzeichnet, dass** die Gondel (202) einen ringförmigen Luftkanal (208) um eine Längsrichtung (X) aufweist und dass die reversible Brennstoffzelle (250) Folgendes umfasst:
- einen Kern (251) um die Längsrichtung (X),
- offene Kanäle (253) um den Kern (251), wobei jeder offene Kanal (253) einen offenen Eingang in dem Luftkanal (208) und einen offenen Ausgang in dem Luftkanal (208) und in Bezug auf die Strömungsrichtung der Luft in dem Luftkanal (208) stromabwärts von dem offenen Eingang aufweist,
- für jeden offenen Kanal (253), eine Brennkammer (252), die einen ersten Eingang (252a) und einen zweiten Eingang (252b) umfasst, wobei die Zufuhrleitung (256) mit jedem ersten Eingang (252a) fluidisch verbunden ist und wobei die Versorgungsleitung (257) mit jedem zweiten Eingang (252b) fluidisch verbunden ist,
- für jedes Paar, das aus einem offenen Kanal (253) und einer Brennkammer (252) besteht, einen Elektrolyten (262) zwischen dem offenen Kanal (253) und der Brennkammer (252),
- zwischen jedem offenen Kanal (253) und dem benachbarten Elektrolyten (262), eine Kathode (264), und
- zwischen jeder Brennkammer (252) und dem benachbarten Elektrolyten (262), eine Anode (260).

4. Antriebssystem (150) nach Anspruch 3, **dadurch gekennzeichnet, dass** jeder offene Kanal (253) eine Fläche des Eingangs aufweist, die kleiner als die Fläche eines Zwischenbereichs zwischen dem Eingang und dem Ausgang ist, und wobei die Fläche des Ausgangs kleiner als die Fläche des Zwischenbereichs ist.

5. Antriebssystem (150) nach einem der Ansprüche 3 oder 4, **dadurch gekennzeichnet, dass** die offenen Kanäle (253) zylindrische Kanäle sind, die um die Längsrichtung koaxial zueinander sind, dass die Brennstoffzelle (150) zwischen zwei aufeinanderfolgenden offenen Kanälen (253) eine ringförmige Brennkammer (252) umfasst und dass die Brennstoffzelle (250) zwischen der Brennkammer (252) und jedem offenen Kanal (253) einen Elektrolyten (262) umfasst.

6. Antriebssystem (150) nach einem der Ansprüche 3 oder 4, **dadurch gekennzeichnet, dass** die offenen Kanäle (253) nebeneinander angeordnet und winkelförmig um die Längsrichtung (X) verteilt sind und dass die Brennstoffzelle (250) um jeden offenen Kanal (253) einen ringförmigen Elektrolyten (262) um die Achse des offenen Kanals (253) und um den Elektrolyten (262) eine ringförmige Brennkammer (252) um die Achse des offenen Kanals (253) umfasst.

7. Antriebssystem (150) nach einem der Ansprüche 1 bis 6, **dadurch gekennzeichnet, dass** es eine thermisch isolierende Schicht (271) umfasst, die zwischen der Brennstoffzelle (250) und dem Elektromotor (108) angeordnet ist.

8. Flugzeug (100), das auf einem Vorfeld parkt, das einen temporären Tank (257a), der Wasser enthält, und einen elektrischen Generator (259) aufweist, und das einen Tank (254), der Diwasserstoff enthält, und ein Antriebssystem (150) nach einem der vorhergehenden Ansprüche umfasst, wobei die Anoden (260) und die Kathoden (264) mit dem elektrischen Generator (259) elektrisch verbunden sind, wobei die Brennstoffzelle (250) durch die Zufuhrleitung (256) mit dem Tank (254) und durch die Versorgungsleitung (257) mit dem temporären Tank (257a) fluidisch verbunden ist.

9. Flugzeug (100) nach Anspruch 8, **dadurch gekennzeichnet, dass** es einen Rumpf (102) umfasst und dass sich der Tank (254) hinten im Rumpf (102) befindet.

## Claims

1. Propulsion system (150) for an aircraft (100) that includes a tank (254) containing dihydrogen and is parked on a tarmac with a temporary tank (257a) containing water and an electric generator (259), the propulsion system (150) including:
- a nacelle (202),
- an electric motor (108) fixed inside the nacelle (202) and including an outlet on which a shaft (214), a first electrical terminal and a second electrical terminal are mounted,
- a propeller (110) rotated by said shaft (214),
- a reversible fuel cell (250) with at least one anode (260) electrically connected to the first electrical terminal and at least one cathode (264) electrically connected to the second electrical terminal, where the anodes (260) and cathodes (264) are intended to be electrically connected to the electric generator (259),
- a supply line (256) intended to fluidically connect the tank (254) to the fuel cell (250),
- a feed line (257) intended to fluidically connect the fuel cell (250) to the temporary tank (257a), and **characterized in that** it includes:
- a pump (258) arranged on the supply line (256) between the tank (254) and the fuel cell (250), and where the pump (258) is reversible to alternately drive the dihydrogen from the tank (254) to the fuel cell (250) or from the fuel cell (250) to the tank (254).

2. Propulsion system (150) according to Claim 1, **characterized in that** it includes a heat exchanger (265) arranged to ensure an exchange of calories between the electric motor (108) and the dihydrogen in the supply line (256).

3. Propulsion system (150) according to any one of Claims 1 or 2, **characterized in that** the nacelle (202) has an annular air duct (208) around a longitudinal direction (X) and the reversible fuel cell (250) includes:
- a core (251) around the longitudinal direction (X),
- open ducts (253) around the core (251), where each open duct (253) has an open inlet into the air duct (208) and an open outlet into the air duct (208) and downstream of the open inlet with respect to the airflow direction in the air duct (208),
- for each open duct (253), a fuel chamber (252) having a first inlet (252a) and a second inlet (252b), where the supply line (256) is fluidically connected to each first inlet (252a) and where the feed line (257) is fluidically connected to each second inlet (252b),
- for each pair consisting of an open duct (253) and a fuel chamber (252), an electrolyte (262) between the open duct (253) and the fuel chamber (252),
- between each open duct (253) and the adjacent electrolyte (262), a cathode (264), and
- between each fuel chamber (252) and the adjacent electrolyte (262), an anode (260).

4. Propulsion system (150) according to Claim 3, **characterized in that** each open duct (253) has an inlet surface smaller than the surface of an intermediate zone between the inlet and the outlet, and where the outlet area is smaller than the surface of the intermediate zone.

5. Propulsion system (150) according to any one of Claims 3 or 4, **characterized in that** the open ducts (253) are cylindrical ducts coaxial with each other around the longitudinal direction, **in that** between two consecutive open ducts (253), the fuel cell (150) comprises an annular fuel chamber (252), and **in that** between the fuel chamber (252) and each open duct (253), the fuel cell (250) comprises an electrolyte (262).

6. Propulsion system (150) according to any one of Claims 3 or 4, **characterized in that** the open ducts (253) are arranged side by side and distributed angularly around the longitudinal direction (X), **in that** around each open duct (253), the fuel cell (250) comprises an annular electrolyte (262) around the axis of the open duct (253) and around the electrolyte (262), an annular fuel chamber (252) around the axis of the open duct (253).

7. Propulsion system (150) according to any one of Claims 1 to 6, **characterized in that** it includes a thermally insulating layer that is disposed between the fuel cell (250) and the electric motor (108).

8. Aircraft (100) parked on a tarmac with a temporary tank (257a) containing water and an electric generator (259) and having a tank (254) containing dihydrogen and a propulsion system (150) according to any of the preceding claims, in which the anodes (260) and cathodes (264) are electrically connected to the electric generator (259), in which the fuel cell (250) is fluidically connected to the tank (254) through the supply line (256) and to the temporary tank (257a) through the feed line (257).

9. Aircraft (100) according to Claim 8, **characterized in that** it includes a fuselage (102) and the tank (254) is located to the rear of the fuselage (102).
